# EUROPÄISCHE PATENTANMELDUNG

(11) **EP 1 559 531 A1**
(43) Veröffentlichungstag der Anmeldung: **03.08.2005**
(21) Anmeldenummer: 05405044.8
(22) Anmeldetag: 28.01.2005
(51) Int. Cl.: B29C 45/44

(54) **Einsatz für ein Spritzgusswerkzeug und Spritzgusswerkzeug mit diesem Einsatz**

(30) Priorität: 30.01.2004 CH 1342004
(71) Anmelder: Kramer AG, 5326 Schwaderloch (CH)
(72) Erfinder: Kramer, Hans, 5326 Schwaderloch (CH)
(74) Vertreter: Patentanwälte Feldmann & Partner AG

(57) **Zusammenfassung**

Es wird ein Einsatz (20) vorgeschlagen zur Festigung von hintergriffenen Teilen, welcher aus mindestens zwei Teilschalen (21) besteht. Die Teilschalen sind im Bereich eines Fusses (23) mittels Haltemittel gehalten. Zwischen den Teilschalen (21) greift ein Spreizmittel (40) ein, welches beim Öffnen des Spritzgusswerkzeuges (1) die Teilschalen öffnet und den hintergriffigen Teil freigibt.

## Beschreibung

Die vorliegende Erfindung betrifft einen in einem Spritzgusswerkzeug verschieblich geführten Einsatz zur Fertigung von an einem Kunststoffwerkstück angeformten hintergriffigen Teil gemäss Oberbegriff des Patentanspruches 1, sowie ein Spritzgusswerkzeug gemäss Oberbegriff des Patentanspruches 12.

Spritzgusswerkzeuge sind in ihrem üblichen Aufbau so gestaltet, dass eine düsenseitige Platte und eine ausstossseitige Platte sich aufeinander zu bewegen bis sie dichtend aufeinander liegen, worauf dann in die vorhandenen Kavitäten von der düsenseitigen Platte her der verflüssigte Kunststoff in die Hohlräume eingepresst wird. Sobald die Kavitäten gefüllt sind, fahren die beiden Platten des Spritzgusswerkzeuges auseinander, und die fertig erstellten Kunststoffteile werden von der ausstossseitigen Platte aus den Kavitäten heraus gestossen. Dies bedingt, dass die Formen so ausgelegt werden, dass keine Teile senkrecht zur Relativbewegungsrichtung der beiden Platten hintergreifend gestaltet sind. Dies lässt sich jedoch bei komplexeren Formen meist nicht vermeiden. Typisch sind Kunststoffteile, an denen Haken oder Wandungen mit senkrecht dazu verlaufenden Durchbrüchen, oder Teile, mit denen formschlüssige Verbindungen erstellt werden sollen, eben doch hintergriffig gestaltet.

Um dies realisieren zu können sind im Spritzgussformenbau insbesondere zwei werkzeugtechnische Varianten seit vielen Jahren bekannt. Dies sind Seitenzüge und Schieber. Während Seitenzüge Elemente sind, die ohne zusätzliche Antriebsmittel allein durch die Zusammenfahr- beziehungsweise Auseinanderfahrbewegung der beiden Platten betätigt werden, sind Schieber Elemente, die einen gesonderten Antriebmechanismus, meistens mittels Kolbenzylindereinheiten, umfassen. Je nach der Komplexität sind ein oder mehrere Schieber erforderlich. Im Extremfall werden sogenannte sternförmig auf das Formteil zulaufende Schieber eingesetzt. In diesem Fall wird oftmals von sogenannten Sternschiebern gesprochen. Der Einsatz von Schiebern verursacht erhebliche Mehrkosten beim Formenbau. Die Schieber müssen in der Platte entsprechend geführt werden, und es müssen die entsprechenden Betätigungsmittel angebracht werden. Handelt es sich beim Werkzeug um ein sogenanntes Mehrfachwerkzeug, in dem mehrere gleiche oder unterschiedliche Kunststoffteile gleichzeitig gefertigt werden, so potenzieren sich die hierbei auftretenden Schwierigkeiten. Bei grösseren Werkzeugen mit beispielsweise 36-fach Formen lassen sich Schieber praktisch nicht mehr realisieren.

Bei ausgesprochen komplexen Kunststoffteilen, bei denen sich das Kunststoffteil bezüglich der Trennebene der beiden Platten in eine oder mehrere Richtungen konisch erweitert, ist es nur noch möglich, solche Teile mit sogenannten Spannzangensystemen zu formen. Bei den Spannzangen handelt es sich um einteilige Einsätze, die sich elastisch verformen lassen. Im Werkzeugbau für Spritzgusswerkzeuge werden auch für diverse Standard-Formelemente, wie Elemente mit Gewinden, zylindrische Kerne zur Formung von Hohlräumen und dergleichen Einsätze angeboten, mit denen kundenspezifische Spritzgusswerkzeuge mit solchen Standard-Elementen ergänzt werden können. Trotz all dieser Möglichkeiten besteht ein grosser Bedarf, um einen möglichst einfachen und preiswerten Einsatz für Spritzgusswerkzeuge anbieten zu können, mit der Teile mit einem Hintergriff gefertigt werden können. Diese Aufgabe löst die vorliegende Erfindung mit einem Einsatz der eingangs genannten Art, welches die kennzeichnenden Merkmale des Patentanspruches 1 aufweist, während ein mit dem erfindungsgemässen Einsatz ausgerüstetes Werkzeug die Merkmale des Anspruches 19 umfasst.

Weitere vorteilhafte Ausgestaltungsformen der Erfindungsgegenstände gehen aus den abhängigen Ansprüchen hervor und deren Bedeutung wird in der nachfolgenden Beschreibung unter Bezug auf die beiliegenden Zeichnungen erläutert.

In der anliegenden Zeichnung sind verschiedene bevorzugte Ausführungsbeispiele des Erfindungsgegenstandes dargestellt und nachfolgend beschrieben. Es zeigt:
- Figur 1: einen Vertikalschnitt durch ein erfindungsgemässes Spritzgusswerkzeug und
- Figur 2: einen Vertikalschnitt durch die ausstossseitige Platte mit dem erfindungsgemässen Einsatz in der Position wie im geschlossenen Werkzeug, während
- Figur 3: dieselbe Situation wie in Figur 2 darstellt, wobei dies jedoch die Ausstossposition zeigt.
- Figuren 4A-C: zeigen Beispiele von Elementen mit Hintergriff, wie sie beispielsweise mit dem erfindungsgemässen Einsatz herstellbar sind;
- Figur 5: zeigt einen aus zwei Halbschalen bestehenden Einsatz zur Fertigung eines hintergriffigen Kunststoffteiles für sich allein dargestellt.
- Figuren 6A+B: verdeutlichen eine Ausgestaltungsform eines Einsatzes mit zylindrischem Kopf und dazu angepasste ausstossseitige Platte;
- Figuren 7-9: zeigen verschiedene mögliche Gestaltungsformen des Kopfes des Einsatzes, während die
- Figuren 10-12: unterschiedliche Ausgestaltungsformen der Verbindung zwischen Einsatzfuss und Halteplatte aufzeigen.
- Figur 13: zeigt einen längenanpassbaren Einsatz mit einem in der Trägerplatte höhenverstellbaren Fuss;
- Figur 14: den höhenverstellbaren Fuss im Querschnitt und
- Figur 15: den selben in der Aufsicht von unten.

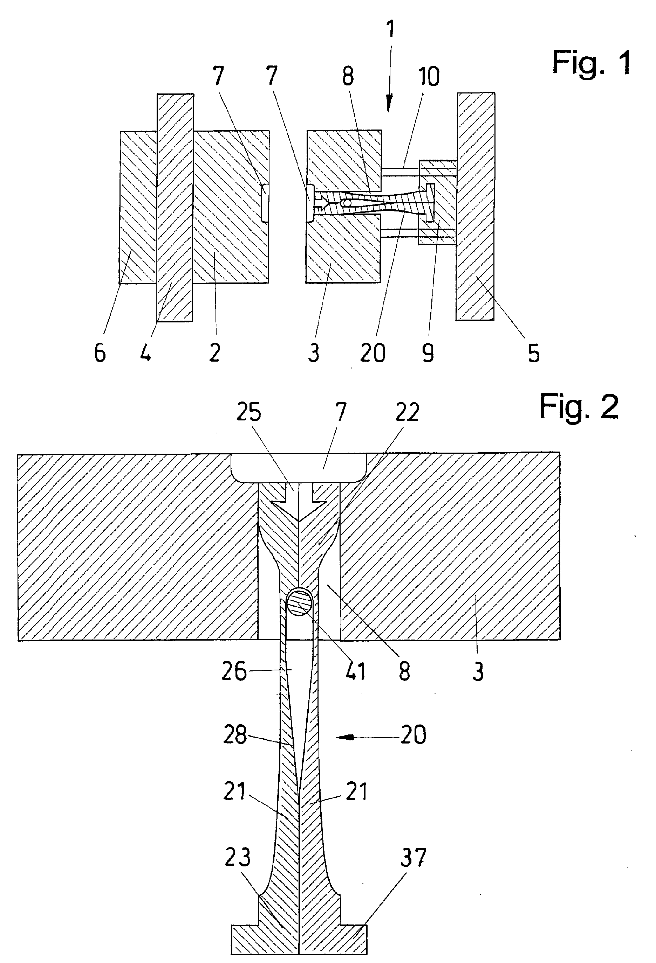

Bezüglich des generellen Aufbaus eines Spritzgusswerkzeuges, welches gesamthaft mit 1 bezeichnet ist, wird auf die Figur 1 verwiesen. Das Spritzgusswerkzeug 1 ist hier in einer offenen Stellung gezeigt. Die eigentlichen, die Formen der zu spritzenden Kunststoffteile aufweisenden Platten sind einerseits die düsenseitige Platte 2 und andererseits die ausstossseitige Platte 3. beiden Platten 2 und 3 sind direkt oder mittelbar auf beidseitig vorhandene Trägerplatten 4 und 5 angeordnet. Die düsenseitige Platte 2 und die ausstossseitige Platte 3 weisen gemeinsam eine Kavität 7 auf. Auf der Seite der düsenseitige Platte 2 kann zusätzlich noch eine Heizplatte 6 vorhanden sein. Diese kann aber auch mit der Trägerplatte 4 kombiniert sein. In der düsenseitigen Platte 2 sind die hier nicht dargestellten Heizkanäle und mindestens ein Anspritzkanal vorhanden. Mindestens ein Anspritzkanal mündet über eine ebenfalls nicht dargestellte Düse jeweils in eine zu füllende Kavität 7. Im geschlossenen Zustand des Spritzgusswerkzeuges kommunizieren die beiden Teil-Kavitäten und werden so über die Düse in der düsenseitigen Platte 2 gemeinsam gefüllt. Sind die Kavitäten 7 gefüllt, so werden die düsenseitige Platte 2 und die ausstossseitige Platte 3 auseinander gefahren, wobei üblicherweise das geformte Kunststoffteil so gestaltet ist, dass es in der ausstossseitigen Platte 3 gehalten ist und aus der düsenseitigen Platte 2 heraus gezogen wird, worauf dann beispielsweise ein in der ausstossseitigen Platte 3 vorhandener Ausstossbolzen das gefertigte Kunststoffteil aus der ausstossseitigen Platte 3 der Form hinaus stösst.

Im vorliegenden Fall ist die ausstossseitige Platte 3 mit einer Bohrung 8 durchsetzt, die parallel zur Öffnungs- und Schliessbewegung des Spritzgusswerkzeuges verläuft. In dieser Bohrung 8 lagert ein Einsatz 20. Bezüglich der genaueren Ausgestaltung des Einsatzes 20 wird später mit Bezug auf die nachfolgenden Zeichnungen eingegangen. Der Einsatz 20 ist direkt oder indirekt an der Trägerplatte 5 gehalten. Im vorliegenden Fall ist hierzu eine Halteplatte 9 vorgesehen. Während eines Spritzvorganges werden hier nicht nur die beiden Trägerplatten 4 und 5 aufeinander zu und voneinander weg bewegt, sondern zusätzlich lässt sich die ausstossseitige Platte 3 relativ zu ihrer Trägerplatte 5 bewegen. Hierzu sind entsprechende Führungsstangen 10 vorhanden. Die für die entsprechenden Relativbewegungen erforderlichen Antriebsmittel sind in der Zeichnung nicht dargestellt.

Ist die eigentliche Form, welche durch die düsenseitige Platte 2 und die ausstossseitige Platte 3 gebildet wird, auseinander gefahren und die Form folglich offen, so wird dann die ausstossseitige Platte 3 in Richtung zu ihrer Trägerplatte 5 hin bewegt, wodurch der Einsatz 20 aus der ausstossseitigen Platte 3 hinaus fährt, wobei der Einsatz 20 mit seinem verjüngten Teil im Bereich der ausstossseitigen Platte 3 liegt, während der Kopf des Einsatzes 20 aus der ausstossseitigen Platte 3 hinaus ragt und freigestellt wird und sich zudem die beiden Halbschalen zangenartig öffnen und das hintergriffige Teil freistellen. In diesem Fall wirkt der Einsatz 20 gleichzeitig als Ausstosser.

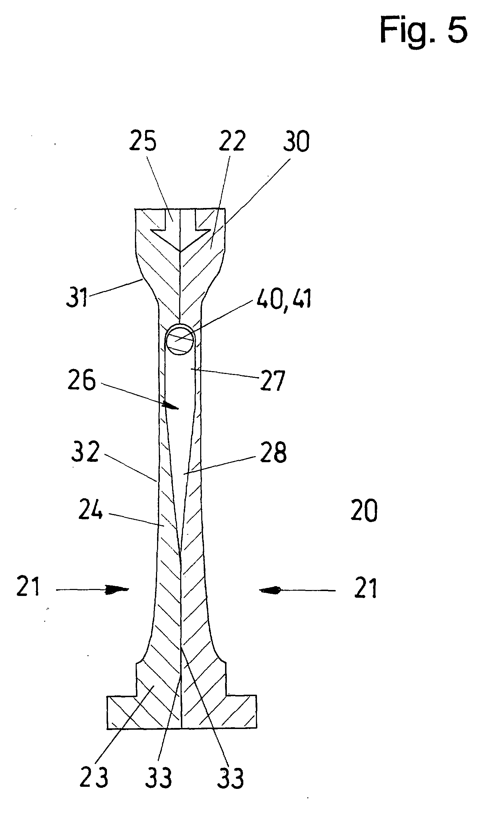

Die genauere Ausgestaltungsform des Einsatzes 20 ist aus der Figur 5 ersichtlich. Hier ist der Einsatz 20 für sich allein dargestellt. Generell kann der Einsatz 20 aus mehreren Teilschalen bestehen. In der Figur 5 ist jedoch ein diametraler Längsschnitt durch eine Ausführungsform gezeigt, die aus zwei Teilschalen 21 besteht, die folglich hier Halbschalen sind. Je nach Anzahl der Teilschalen 21 müssen entsprechende Spreizmittel vorhanden sein. Beispielsweise kann der Einsatz 20 aus vier Teilschalen bestehen, wobei jeweils zwei einander gegenüber liegende Schalen durch entsprechende Druckfedern, die auf unterschiedlichen Höhen angebracht sind, betätigbar sind.

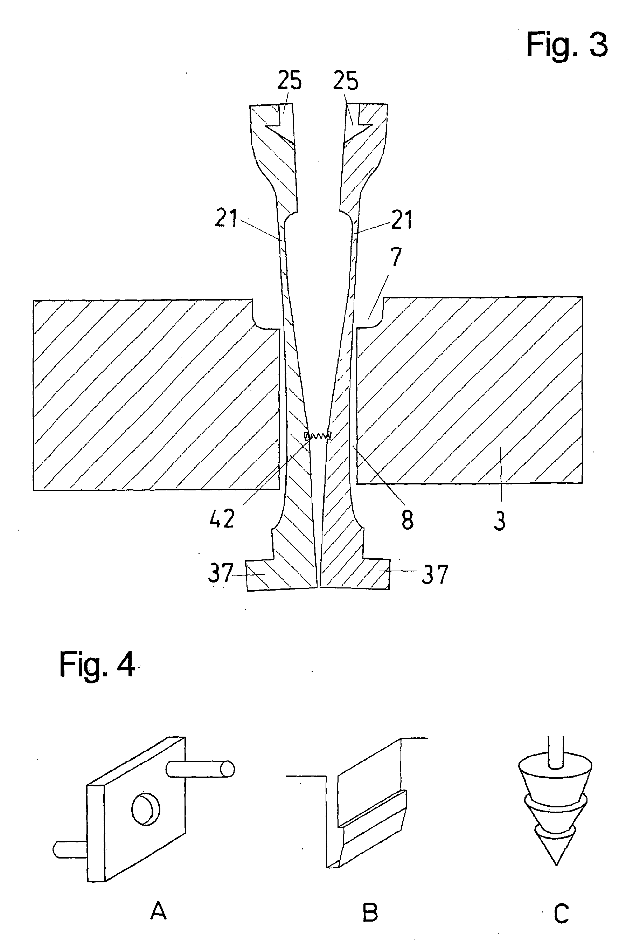

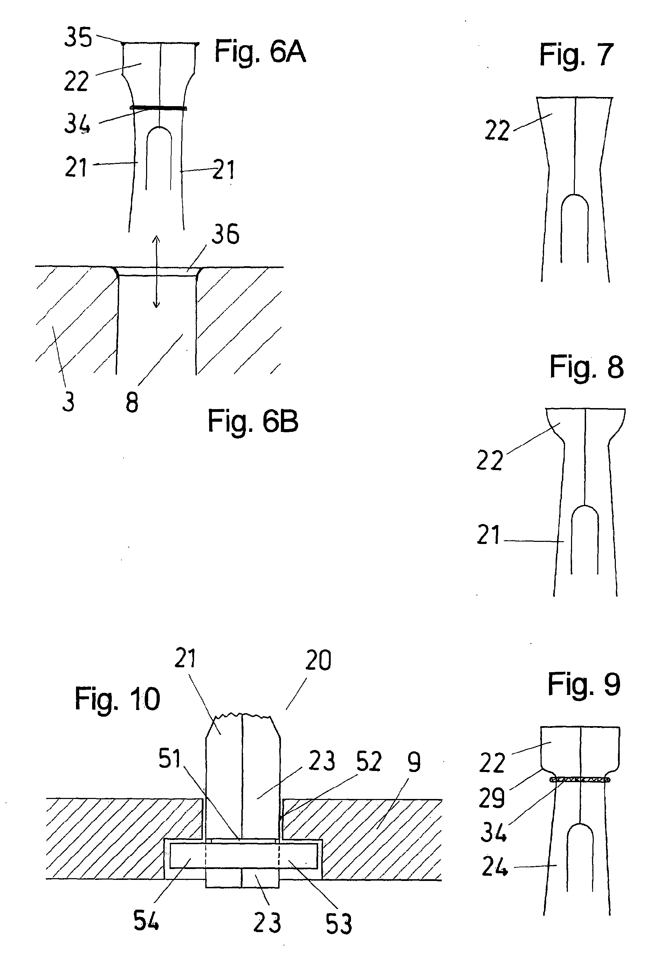

Der aus Teilschalen 21 bestehende Einsatz 20 weist drei markante Abschnitte auf, nämlich einen Kopf 22, einen Fuss 23 und dazwischen einen verjüngten Abschnitt, der nachfolgend als Stamm 24 bezeichnet wird. Der äussere Bereich des verjüngten Abschnittes ist mit 32 bezeichnet. Die Teilschalen 21 weisen im Kopf 22 eine geteilte Einsatzkavität 25 auf, mittels der verschiedene hintergriffige Teile am Werkstück herstellbar sind, wie beispielsweise in den Figuren 4A-C gezeigt. Zum Öffnen der Teilschalen 21 ist mindestens ein Spreizelement 40 vorhanden. In der Ausführungsform gemäss der Figur 5 ist dieses Spreizmittel 40 ein Spreizbolzen 41, der den Stamm 24 durchsetzt. Die Teilschalen 21 weisen Berührungsflächen 33 auf, die im geschlossenen Zustand des Einsatzes 20 aufeinander liegen. In diesen Berührungsflächen 33 ist eine Führungsbahn 26 eingeformt. Die Führungsbahn 26 weist zwei Abschnitte auf. In einem ersten Abschnitt, der als Ausfahrabschnitt 27 der Führungsbahn 26 bezeichnet ist, verlaufen dessen mit dem Spreizmittel 40 in Wirkverbindung stehende Bereiche parallel. In diesem Bereich findet folglich während des Ausfahrens des Einsatzes 20 noch keine Spreizung der Teilschalen 21 des Einsatzes 20 statt. Bei einem Spritzvorgang wird die Kavität 7 in der düsenseitigen Platte 2 und der ausstossseitigen Platte 3, sowie die geteilte Einsatzkavität 25 gefüllt. Nachdem die Einspritzdüse geschlossen ist, fahren die beiden Trägerplatten 4 und 5 auseinander, und danach fährt die ausstossseitige Platte 3 auf den Führungsstangen 10 geführt auf die Trägerplatte 5 zu. Hierbei wird der Einsatz 20 aus der Bohrung 8 in der ausstossseitigen Platte 3 ausgefahren. Sobald der Kopf 22 aus der Bohrung 8 ausgefahren ist, gelangt der Spreizbolzen 41 in den Spreizabschnitt 28 und drückt die beiden Teilschalen 21 sukzessive auseinander. Hierbei wird das hintergriffige Teil des gespritzten Kunststoffwerkstückes freigestellt. Bei dieser Bewegung wirkt der Einsatz 20 gleichzeitig auch als Ausstosser des gefertigten Werkstückes. Sollte dies nicht ausreichen, so kann auch noch eine weitere hier nicht dargestellte aktive Ausstosshilfe in Funktion treten. Bei der Öffnung des Einsatzes 20 führen die Teilschalen 21 eine Kippbewegung um den Fuss 23 aus. Damit dies möglich ist, muss der Fuss 23 des Einsatzes 20 mit entsprechendem Spiel gehalten sein, um diese Relativbewegung zuzulassen. Hierauf wird nachfolgend noch mit Bezug auf die Figuren 10 - 12 eingegangen.

Nach dem Ausstossen des gefertigten Kunststoffwerkstückes wird vorerst die Ausstossplatte 3 wieder vorgefahren, bevor die Form geschlossen wird, indem die beiden Trägerplatten 4 und 5 in die Schliessstellung gefahren werden. Um diese Bewegung ohne Schaden am Einsatz 20 durchführen zu können, sind verschiedene Vorkehrungen am Kopf 22 des Einsatzes 20 vorsehbar. In den Figuren 6A und 6B ist eine erste Lösung vorgesehen, bei welcher der Einsatz 20 einen zylindrischen Kopf 22 aufweist. Der Übergang vom zylindrischen Kopf 22 zur Verjüngung erfolgt hier scharfkantig. Dies bedingt eine aktive Schliessung der Teilschalen 21. Diese aktive Schliessbewegung erfolgt hier mittels einer Schliessfeder 34. Die Schliessfeder 34 kann ein temperaturbeständiger hochelastischer Gummiring sein, oder sie kann aus einer verschliessbaren und öffenbaren, zu einem Ring zusammensetzbaren Spiralfeder geformt sein. Diese Schliessfeder 34 führt dazu, dass die Teilschalen 21 am Spreizmittel 40 ständig anliegen und entsprechend die Teilschalen 21 mit ihren Berührungsflächen 33 vollständig aufeinander liegend erst in die Bohrung 8 einfährt. Damit hier trotzdem keine Zerstörung am Einsatz beziehungsweise an der Spritzform entsteht, ist die Bohrung 8 mit einer Einlaufkante 36 an der Ausstossplatte 3 versehen. Diese vorzugsweise gerundete Einlaufkante 36 soll meist in der Schliessstellung vollständig geschlossen sein, wozu am Kopf 22 des Einsatzes 20 eine gegengleiche Erweiterung 35 angeformt ist, welche die Einlaufkante 36 vollständig verschliesst. Falls jedoch eine entsprechende Braue am Spritzgussteil unwesentlich ist, kann selbstverständlich auf die Erweiterung 35 am Kopf 22 verzichtet werden.

Auch in der Figur 9 ist eine Ausführungsform eines Einsatzes 20 mit einem Kopf 22 dargestellt, wobei auch hier wiederum der Kopf 22 einen zylindrischen Abschnitt aufweist. Dem zylindrischen Abschnitt erfolgt dann ein gerundeter Übergang, der einen zentrierenden Einlauf des Einsatzes 20 in die Bohrung 8 der ausstossseitigen Platte 3 sicherstellt. Auch hier werden die Teilschalen 21 mittels einer Schliessfeder 34 geschlossen.

Auf eine aktive Schliessung mittels einer Schliessfeder 34 kann verzichtet werden, wenn der Kopf 22 des Einsatzes 20 keinen zylindrischen Abschnitt aufweist. Entsprechend zeigt die Figur 7 eine Lösung, bei welcher der Kopf 22 von der engsten Stelle des Stammes 24 sich kegelförmig zum Ende hin erweitert. Bei dieser konischen Gestaltung des Kopfes 22 erfolgt folglich eine passive Schliessung des Einsatzes 20, wenn dieser in die ausstossseitige Platte 3 hineingezogen wird.

In völlig ähnlicher Weise erfolgt dies auch bei der Ausführung gemäss der Figur 8. Hier ist der Kopf 22 des Einsatzes 20 mindestens annähernd sphärisch gewölbt zu einer Kugelkalotte geformt.

Prinzipiell braucht der Einsatz 20 nicht rotationssymmetrisch gestaltet zu sein. Da dies jedoch fertigungstechnisch die bei weitem günstigste Herstellungsform ist, ist auf die Darstellung anderer Ausgestaltungsformen des Einsatzes 20 verzichtet worden.

Wie bereits zuvor erwähnt, muss der Fuss 23 des Einsatzes 20 so gehalten sein, dass die Teilschalen 21 eine gewisse Kippbewegung durchführen können. Der Fuss 23, der üblicherweise in der Halteplatte 9 gelagert ist, kann entsprechend verschiedenartig ausgestaltet sein. Diesbezüglich wird auf die Figuren 10 bis 12 verwiesen. In der Ausführung gemäss der Figur 10 weisen die Halbschalen 21 des Einsatzes 20 im Bereich des Fusses 23 eine ringförmige Nut 51 auf. Der Fuss 23 ist selber als zylindrischer Abschnitt 50 gestaltet. Der Durchmesser dieses zylindrischen Abschnittes 50 ist kleiner als eine Bohrung 52 in der Halteplatte 9. In der Ringnut 51 lagert mit Spiel ein zweiteiliger oder mehrteiliger scheibenartiger Rückhaltering 53. Bei einer Spreizbewegung der Teilschalen 21 vermögen die Teile des scheibenartigen Rückhalteringes 53 diametral nach aussen sich verschieben. Entsprechend ist der mehrteilige scheibenartige Rückhaltering 53 in einer Aufnahme 54 in der Halteplatte 9 gesichert gehalten. Die entsprechende Sicherung ist hier nicht dargestellt. Die Sicherung in der Aufnahme 54 kann aber beispielsweise mittels einem Segerring oder mittels einem Schliessdeckel erfolgen.

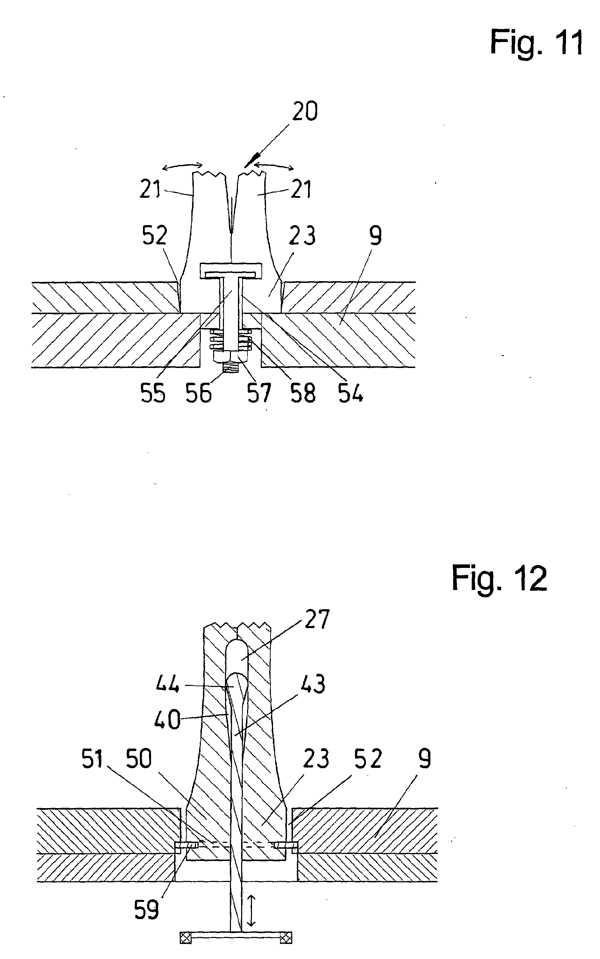

Während in der Ausführungsform gemäss der Figur 10 die Halterung des Einsatzes 20 in der Halteplatte 9 mittels aussen angreifenden Mitteln erfolgt, ist in der Figur 11 eine Variante gezeigt, bei der die Halterung mittels einem innenliegenden Haltemittel erfolgt. Auch hier ist der Einsatz 20 mit seinen Teilschalen 21 mit seinem zylindrischen Fuss 23 in der Halteplatte 9 gehalten. Die Bohrung 52 in der Halteplatte 9 kann hier statt zylindrisch auch konisch geformt sein. Die Konizität muss entsprechend dem grössten Spreizwinkel angepasst sein. Im hier gezeigten Beispiel ist zentrisch in den beiden Teilschalen 21 ein Pilz- oder T-förmiges Haltemittel vorgesehen, welches in einer entsprechenden Ausnehmung 54 mit Spiel lagert. Das Haltemittel 55 ist in der Halteplatte 9 axial verschiebbar geführt. Entsprechend ist das Haltemittel 55 endständig mit einem Gewinde 56 versehen, auf dem unter Zwischenlage einer Feder 58 eine Sicherungsmutter 57 aufschraubbar ist. Bei der Kippbewegung der Teilschalen 21 wird der Kopf des Haltemittels 55 gegen den Druck der Feder 58 leicht angehoben. Entsprechend führt die Feder 58 auch bei der Rückstellung eine unterstützende Schliesskraft aus. Diese Schliesskraft lässt sich durch die entsprechende Vorspannung der Feder 58 mittels der Mutter 57 einstellen.

Eine letzte Ausführungsform des Fusses 23 ist zudem in der Figur 12 gezeigt. Hier wird insbesondere aber auch noch eine weitere Ausführungsform eines Spreizmittels 40 gezeigt. Auch hier ist wiederum der Fuss 23 mit einem zylindrischen Abschnitt 50 versehen, in dem eine Ringnut 51 eingedreht ist. In der Ringnut 51 ist hier als Haltemittel ein spreizbarer Federring 59 eingesetzt.

Wie bereits zuvor erwähnt, sind die Möglichkeiten der Spreizmittel vielgestaltig. In der Figur 2 ist das Spreizmittel 40 als quer verlaufender Spreizbolzen 41 gestaltet, der fest in der ausstossseitigen Platte 3 lagert. Hierbei quert der Spreizbolzen 41 die Bohrung 8.

Als Variante ist in der Figur 3 das Spreizmittel 40 als Spreizfeder 42 dargestellt. Die Spreizfeder 42 ist hier eine einfache Druckfeder. Statt einer Druckfeder kann selbstverständlich auch eine V-förmige Blattfeder zwischen den Halbschalen eingelegt sein, wie dies zuvor bereits erwähnt wurde.

In der Figur 12 ist nun noch eine Lösung dargestellt, bei der das Spreizmittel 40 den Einsatz 20 nicht diametral durchsetzt, sondern longitudinal. Entsprechend ist das Spreizmittel 40 hier als Stab 43 gezeigt, der endständig einen gerundeten und verdickten Spreizkopf 44 aufweist. Dies bedingt, dass die Spreizbahn sich bis durch den Fuss 23 des Einsatzes 20 hindurch erstreckt. Der unterste Teil der Spreizbahn bildet dabei lediglich eine zentrische zylindrische Bohrung. Mit einem derart gestalteten Spreizmittel lassen sich beliebig viele Teilschalen mit einem einzigen Spreizmittel gleichzeitig öffnen. Dies verlangt selbstverständlich eine aktive Bewegung des Spreizmittels. Auch hier können die Teilschalen wiederum aktiv oder passiv geschlossen werden, wie dies bereits zuvor beschrieben wurde.

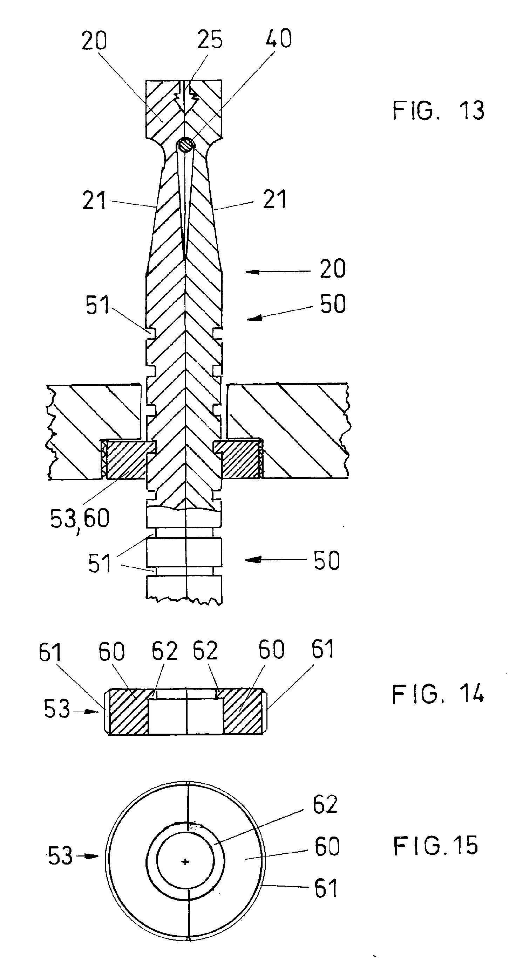

Einsätze der erfindungsgemässen Art werden vom Formenbauer vielfach verwendet und werden wie andere Einsätze bekannter Art praktisch an Lager gehalten. Um diese teure Lagerhaltung zu reduzieren, wird als besonders vorteilhafte Ausgestaltung die Lösung gemäss den Figuren 13-15 vorgeschlagen.

In einer der Formplatten, vorzugsweise der Trägerplatte 4, 5 oder der Halteplatte 9, ist der Einsatz 20 gehalten. Hierzu ist eine Bohrung 8 vorhanden, in der der Einsatz 20 mit Spiel geführt ist. Die beiden Teilschalen 21 des Einsatzes 20 sind nach dem verjüngten Abschnitt 32, in dessen Bereich die Führungsbahn eingeformt ist, zu einem längeren zylindrischen Abschnitt 50 geformt. Der zylindrische Abschnitt 50 ist mit einer Vielzahl von ringförmigen Nuten 51 versehen, die hier eine Doppelfunktion ausüben. Wie bereits in den Ausführungen nach den Figuren 10 und 12 beschrieben, dienen sie zur Aufnahme von einem Rückhaltering 53, und gleichzeitig aber auch als Sollbrennstellen, mit der die Einsätze 20 auf eine genügend annähernde Länge abgetrennt werden können. Sind die ringförmigen Nuten 51 tief genug geformt, genügt es, den Einsatz in einen Schraubstock einzuspannen und mit einem Hammerschlag abzubrechen. Selbstverständlich kann die Durchtrennung auch durch Sägen oder maschinelles Abstechen erfolgen.

Auf jeden Fall ist jedoch ein massgenaues Arbeiten nicht erforderlich. Hierzu ist der Einsatz mit einem bereits erwähnten Rückhaltering 53 gehalten, der in den Figuren 14 und 15 detailliert dargestellt ist. Der Rückhaltering 53 ist aus zwei Halbringen 60 gebildet. Diese Halbringe haben eine radial nach innen gerichtete Ringwulst 61. Die Ringwulste 61 sind in Grösse und Form komplementär zu den Ringnuten 51 im zylindrischen Abschnitt 50 des Stammes 24.

Zusätzlich haben die Halbringe 60 des Rückhalteringes 53 ein Aussengewinde 61. Dies erlaubt es, den Einsatz sehr präzise auf die Kavität 7 oder der planen Oberfläche der ausstossseitigen Platte anzupassen, ohne das zuvor eine aufwendige exakte Längenmessung und Anpassung erforderlich ist. Hierdurch wird viel Arbeitszeit gespart und vor allem auch eine wesentlich umfangreichere Lagerhaltung vermieden.

Die Figuren 4A-C zeigen einige Beispiele von hintergriffigen Teilen an einem Kunststoffwerkstück, die mit den zuvor beschriebenen erfindungsgemässen Einsätzen problemlos gestaltet werden können. Dies können beispielsweise, wie die Figur 4A zeigt, vorstehende oder einspringende Elemente an einer Teilwand sein, oder hakenförmige Verriegelungsmittel, wie dies Figur 4B zeigt, oder zapfenförmige Dicht- oder Rückhaltemittel, wie dies beispielsweise die Figur 4C zeigt.

### Liste der Bezugszahlen

- 1: Spritzgusswerkzeug
- 2: düsenseitige Platte
- 3: ausstossseitige Platte
- 4,5: Trägerplatten
- 6: Heizplatte
- 7: Kavität
- 8: Bohrung
- 9: Halteplatte
- 10: Führungsstangen
- 20: Einsatz
- 21: Teilschalen
- 22: Kopf
- 23: Fuss
- 24: Stamm
- 25: Einsatzkavität
- 26: Führungsbahn
- 27: Ausfahrabschnitt
- 28: Spreizabschnitt
- 30: zylindrischer Abschnitt des Kopfes
- 31: gerundeter Einlaufabschnitt
- 32: verjüngter Abschnitt
- 33: Berührungsflächen
- 34: Schliessfeder
- 35: Erweiterung
- 36: Einlaufkante
- 37: Kragen
- 40: Spreizmittel
- 41: Spreizbolzen
- 42: Spreizfeder
- 43: Stab
- 44: Spreizkopf
- 50: zylindrischer Abschnitt
- 51: ringförmige Nut
- 52: Bohrung
- 53: Rückhaltering
- 54: Aufnahme
- 55: Haltemittel
- 56: Gewinde
- 57: Sicherungsmutter
- 58: Feder
- 59: Federring
- 60: Halbringe
- 61: Aussengewinde

## Patentansprüche

1. In einem Spritzgusswerkzeug (1) verschieblich geführter Einsatz (20) zur Fertigung von einem an einem Kunststoffwerkstück angeformten hintergriffigen Teil, **dadurch gekennzeichnet, dass** der Einsatz (20) mit einem Kopf (22) und einem Fuss (23) aus mindestens zwei den hintergriffigen Teil in der Spritzlage, mit Ausnahme der Anbindstelle am Kunststoffelement, vollständig umschliessenden mindestens zwei Teilschalen (21) besteht, die einen Stamm (24) bilden, der am fussseitigen Ende formschlüssige und/oder kraftschlüssige Haltemittel aufweist, wobei zwischen den Teilschalen (21) ein Spreizmittel (40) vorhanden ist, welches zur Entformung des hintergriffigen Teils die Teilschalen (32) in einer Kippbewegung um das fussseitige Ende (23) kopfseitig radial nach aussen spreizt.

2. Einsatz nach Anspruch 1, **dadurch gekennzeichnet, dass** im Bereich zwischen dem fussseitigen (23) und dem kopfseitigen (22) Ende ein im Querschnitt verjüngter Abschnitt (32) vorhanden ist, dem ein zylindrischer Abschnitt als Stamm (24) folgt, an dem das Haltemittel angreift.

3. Einsatz nach Anspruch 1, **dadurch gekennzeichnet, dass** in den Berührungsflächen (33) der Teilschalen (21) eine Führungsbahn (26) für das Spreizmittel (40) eingeformt ist.

4. Einsatz nach Anspruch 3, **dadurch gekennzeichnet, dass** das Spreizmittel (40) ein den Stamm (24) querender Spreizbolzen (41) ist.

5. Einsatz nach Anspruch 3, **dadurch gekennzeichnet, dass** das Spreizmittel (40) ein axial im Stamm (24) verlaufender Stab (43) mit Spreizkopf (44) ist.

6. Einsatz nach Anspruch 1, **dadurch gekennzeichnet, dass** der kreiszylindrische Abschnitt (50) des Stammes (24) mit einer Anzahl parallelen Ringnuten in gleichbleibenden Abständen als Sollbruchlinien und als Formschlussmittel zum Eingriff eines geteilten Rückhalteringes ausweist, wobei die geteilte Scheibe ein Aussengewinde hat, welches in einem Gewindeloch einer Formplatte höheneinstellbar lagert.

7. Einsatz nach Anspruch 6, **dadurch gekennzeichnet, dass** im kreiszylindrischen Abschnitt (50) eine ringförmige Nut (51) eingeformt ist, in der ein spreizbarer Federring (59) als Haltemittel eingreift.

8. Einsatz nach Anspruch 6, **dadurch gekennzeichnet, dass** in dem kreiszylindrischen Abschnitt (50) zentrisch axial ausgerichtet von unten eine pilz- oder T-förmiges Haltemittel (55) eingreift und in einer entsprechenden Ausnehmung mit Spiel gelagert ist.

9. Einsatz nach Anspruch 1, **dadurch gekennzeichnet, dass** dessen Kopf (22) nach der schlanksten Stelle des Stammes (24) konisch nach oben sich erweitert.

10. Einsatz nach Anspruch 2, **dadurch gekennzeichnet, dass** zwischen zwei Teilschalen (21) als Spreizelement (40) eine Spreizfeder (42) angeordnet ist.

11. Einsatz nach Anspruch 1, **dadurch gekennzeichnet, dass** um den Stamm (24) eine elastische Schliessfeder (34) in der Form eines O-Ringes oder einer ringförmigen Spiralfeder verläuft.

12. Spritzgusswerkzeug (1) zur Fertigung eines Kunststoffelementes mit mindestens einem angeformten hintergriffigen Teil mit einer düsenseitigen Platte (2) und einer ausstossseitigen Platte (3), **dadurch gekennzeichnet, dass** das Werkzeug mindestens einen Einsatz (20) aufweist mit den Merkmalen des Patentanspruches 1.

13. Spritzgusswerkzeug nach Anspruch 12, **dadurch gekennzeichnet, dass** der Einsatz (20) in der ausstossseitigen Platte (3) verschieblich geführt ist und axial relativ zur ausstossseitigen Platte (3) so beweglich ist, dass er zur Entformung des hintergriffigen Teils mit seinem Kopf (22) vollständig hinausfahrbar ist, so dass nur der verjüngte Abschnitt (32) des Einsatzes (20) in einer Bohrung (8) in der Ausstossplatte (3) zu liegen kommt.

14. Spritzgusswerkzeug nach Anspruch 12, **dadurch gekennzeichnet, dass** die Bohrung (8) an der Schliessfläche der Ausstossplatte (3) eine Einlaufkante (36) aufweist und der Kopf (22) des Einsatzes (20) eine dieser Kante entsprechende Erweiterung (35) aufweist.
